# EUROPÄISCHE PATENTSCHRIFT

(11) **EP 1 101 673 B1**
(45) Veröffentlichungstag und Bekanntmachung des Hinweises auf die Patenterteilung: **05.07.2006**
(21) Anmeldenummer: 00124683.4
(22) Anmeldetag: 11.11.2000
(51) Int. Cl.: B60S 1/08

(54) **Sensoreinrichtung und Verfahren zur Herstellung einer Sensoreinrichtung**
Sensor device and method for making a sensor device
Capteur et méthode de fabrication d'un capteur

(30) Priorität: 18.11.1999 DE 19955423
(43) Veröffentlichungstag der Anmeldung: 23.05.2001
(73) Patentinhaber: Hella KGaA Hueck & Co., 59552 Lippstadt (DE)
(72) Erfinder: Beutner, Achim, 59555 Lippstadt (DE); Boehlau, Christian, Dr., 59557 Lippstadt (DE); Schäfer, Heiko, 59597 Erwitte (DE)

(56) Entgegenhaltungen:
- EP-A- 0 694 456
- EP-A- 0 997 360
- WO-A-99/21206
- DE-A- 19 839 273
- DE-A- 19 846 969
- US-A- 5 804 817

## Beschreibung

Die Erfindung betrifft eine Sensoreinrichtung zur Erfassung des Benetzungs- und/oder Verschmutzungsgrades einer an einem Kraftfahrzeug angeordneten Scheibe mit einem Gehäuse bestehend aus an einer Innenseite der Scheibe ankoppelbaren optischen Führungselementen, einem Strahlungssender und einem Strahlungsempfänger, denen jeweils ein mit dem zugehörigen optischen Führungselement gekoppeltes Sammel-/ Richtelement zugeordnet ist, wobei die optischen Achsen der Sammel-/ Richtelemente in einem spitzen Winkel zu der Scheibe ausgerichtet sind, wobei die optischen Führungselemente auf einer dem Strahlungssender und/ oder Strahlungsempfänger abgewandten Seite bündig zu einer der Scheibe zugewandten Wandung des Gehäuses angeordnet sind.

Ferner betrifft die Erfindung ein Verfahren zur Herstellung einer Sensoreinrichtung für Kraftfahrzeuge, die mittels eines transparenten Koppelmediums an die Innenseite der Scheibe des Kraftfahrzeuges befestigt wird.

Aus der DE 40 27 367 C1 ist eine Sensoreinrichtung zur Erfassung des Benetzungsgrades einer an einem Kraftfahrzeug angeordneten Scheibe bekannt, die sich aus einer Mehrzahl von optischen Bauteilen zusammensetzt. Neben einem die Strahlung eines Strahlungssenders reflektierenden Reflektors ist ein optisches Führungselement vorgesehen, an dessen Randfläche eine Verspiegelung angebracht ist, so dass die Strahlung unter einem vorgegebenen Einfallswinkel auf die Scheibe trifft. Ein Strahlungsempfänger ist so positioniert, dass die an der Scheibe totalreflektierte Strahlung nach Führung derselben durch dasselbe optische Führungselement auf den Strahlungsempfänger auftrifft. In einem zwischen dem Strahlungsempfänger und der Scheibe liegenden Bereich ist eine nicht transparente Materialschicht angeordnet, mit der eine Reduzierung der das Meßergebnis verfälschenden Fremdlichtstrahlung ermöglicht wird. Nachteilig an der bekannten Sensoreinrichtung ist, dass die von dem Strahlungssender emittierte Strahlung eine mehrfache zwangsgeführte Reflexion erfährt, bevor sie auf die Scheibe trifft. Dies führt zu einer verringerten Strahlungsausbeute und verschlechtert die Toleranzempfindlichkeit des Strahlungsempfängers bzw. Strahlungssenders. Ferner erfordert die bekannte Sensoreinrichtung einen relativ komplexen Aufbau.

Aus der DE 197 13 910 C1 ist eine Sensoreinrichtung zur Erfassung des Benetzungsgrades einer an einem Kraftfahrzeug angeordneten Scheibe bekannt, die ein einstückiges optisches Führungselement vorsieht mit auf der der Scheibe abgewandten Seite angeordneten Ausnehmungen, in denen jeweils ein Strahlungssender und ein Strahlungsempfänger gelagert sind. Nachteilig an der bekannten Sensoreinrichtung ist, dass in dem optischen Führungselement Mehrfachreflexionen vorgesehen sind, die zu einer Verringerung der Strahlungsausbeute führt. Ferner sind keine abschattenden oder abdeckenden Maßnahmen vorgesehen, um das unerwünschte Detektieren von Fremdstrahlung zu vermeiden.

Aus der DE 40 06 174 C1 ist eine Sensoreinrichtung zur Erfassung des Benetzungsgrades einer an einem Kraftfahrzeug angeordneten Scheibe bekannt, bei der ein einstückiges optisches Führungselement vorgesehen ist mit jeweils einem Strahlungssender und einem Strahlungsempfänger zugeordneten Sammellinsen. An einer Ober- oder Unterseite des optischen Führungselements ist in einem Bereich zwischen den abragenden Sammellinsen eine reflektierende Materialschicht aufgebracht, so dass die von dem Strahlungssender emittierten Strahlen durch mehrfache Reflexion zu dem Strahlungsempfänger leitbar sind. Hierdurch ergibt sich jedoch ein relativ langer Strahlenweg, so dass mit der zwangsgeführten Mehrfachreflexion eine Verringerung der Strahlungsausbeute einhergeht.

Aus der EP 0 694 456 A2 ist eine mit infraroter Meß-Strahlung arbeitende Sensoreinrichtung zur Erfassung des Benetzungsgrades einer Kraftfahrzeugscheibe bekannt, die eine die optischen Führungselemente einstückig aufnehmende Wandung aufweist, wobei die Wandung und die optischen Führungselemente aus einem eingefärbten und für Infrarotstrahlung transparenten Kunststoffmaterial bestehen.

Ferner ist aus der EP 0 997 360 A2 ebenfalls eine mit infraroter Meß-Strahlung arbeitende Sensoreiririchtung zur Erfassung des Benetzungsgrades einer Kraftfahrzeugscheibe bekannt, die eine die optischen Führungselemente einstückig aufnehmende Wandung aufweist. Dabei besteht die Wandung aus einem Kunststoffmaterial, das für Infrarotstrahlung und für Strahlung aus dem sichtbaren Spektralbereich nicht transparent ist, während die optischen Führungselemente aus einem für Infrarotstrahlung transparenten und für Strahlung aus dem sichtbaren Spektralbereich nicht transparenten Kunststoffmaterial bestehen.

Aufgabe der vorliegenden Erfindung ist es, eine Sensoreinrichtung zur Erfassung des Benetzungsgrades und/oder Verschmutzungsgrades einer an einem Kraftfahrzeug angeordneten Scheibe derart weiterzubilden, dass auf einfache Weise bei kompaktem Aufbau auch eine Umgebungslichtsensorik integriert werden kann.

Diese Aufgabe wird durch die Merkmale des Patentanspruchs 1 gelöst. Dabei sind dem Strahlungssender und dem Strahlungsempfänger jeweils ein gesondertes optisches Führungselement von einer ersten Art zugeordnet, wobei die optischen Führungselemente einstückig mit der Wandung verbunden sind und die Wandung aus einem für Infrarotstrahlung und für Strahlung aus dem sichtbaren Bereich nicht transparenten Kunststoffmaterial ausgebildet ist, während die optischen Führungselemente der ersten Art aus einem Kunststoffmaterial bestehen, dass nur für die Infrarotstrahlung transparent ist. Darüber hinaus ist die Wandung erfindungsgemäß mit mindestens einem Umgebungslicht zu einem weiteren Strahlungsempfänger führenden optischen Führungselement einer zweiten Art einstückig ausgebildet, wobei das optische Führungselement der zweiten Art aus einem für Strahlung aus dem sichtbaren Spektralbereich transparenten Kunststoffmaterial besteht.

Ein besonderer Vorteil der erfindungsgemäßen Sensoreinrichtung besteht darin, dass der Strahlungsweg zwischen dem Strahlungssender und Strahlungsempfänger relativ kurz ist und dass mit Ausnahme der Reflexion an einer Außenseite der Scheibe keine unerwünschten zwangsgeführten Reflexionen eintreten. Hierdurch kann die Lichtausbeute wesentlich verbessert werden. Dadurch, daß die optischen Führungselemente einstückig mit einer Wandung des Gehäuses verbunden sind, hat die Wandung zum einen eine die optischen Führungselemente tragende Funktion und zum anderen eine durch die nicht transparente Ausbildung abschattende Funktion, die ein unerwünschtes Eindringen von Fremdlicht in das Gehäuse vollständig verhindert, und zwar sowohl das Eindringen von Strahlung aus dem sichtbaren Spektralbereich als auch das Eindringen von Infrarotstrahlung.Durch die Doppelfunktion der Wandung als Trägermodul für die optischen Führungselemente und als optisches Blockierelement wird außerdem ein einfacher und kompakter Aufbau der Sensoreinrichtung realisiert.

Vorteilhaft bildet die Wandung zusammen mit den optischen Führungselementen ein Trägermodul, das deckelartig auf ein topfförmiges Teil des Gehäuses aufgesetzt und mit diesem form- und/ oder kraftschlüssig verbindbar ist. Hierdurch läßt sich die Anzahl der erforderlichen Bauteile wesentlich reduzieren.

Nach einer Weiterbildung der erfindungsgemäßen Sensoreinrichtung sind der Strahlungssender und der Strahlungsempfänger auf einer gemeinsamen Schaltungsträgerplatte angeordnet, wobei die optischen Achsen derselben senkrecht zu der Scheibe orientiert sind. Die einem Sensor zugeordneten optischen Führungselemente sind vorzugsweise v-förmig zu der Scheibe ausgerichtet und sind um einen solchen spitzen Winkel zu der Scheibe geneigt ausgebildet, dass eine Totalreflexion der von dem Strahlungssender ausgesandten Strahlen an der Außenseite der Scheibe erfolgen kann. Die dadurch bedingte nicht optimale Ausrichtung des Strahlungsempfänger bzw. des Strahlungssenders bezüglich der Strahlungsaustritts- bzw. Strahlungseintrittsfläche der optischen Führungselemente wird zumindest teilweise dadurch kompensiert, dass der Strahlungsweg relativ kurz und frei von zwangsgeführten Reflexionen ist. Dadurch, dass der Strahlungssender und der Strahlungsempfänger flach auf der Schaltungsträgerplatte angeordnet ist, wird zum einen die Bestückung der Schaltungsträgerplatte vereinfacht und zum anderen der erforderliche Bauraum für die vorzugsweise als SMD-Bauteile (Surface Mounted Device-Bauteile) ausgeführten Strahlungssender und - empfänger verringert, so dass das Gehäuse der Sensoreinrichtung insgesamt flacher ausgebildet sein kann.

Nach einer Weiterbildung der Erfindung ist ein Abstandhalter vorgesehen, der sich zwischen der Schaltungsträgerplatte und der Wandung erstreckt und somit den Abstand von Strahlungssender und -empfänger zu dem jeweiligen optischen Führungselement definiert.

Aufgabe der vorliegenden Erfindung ist es ferner, ein Verfahren zur Herstellung einer Sensoreinrichtung anzugeben, so dass die Sensoreinrichtung fertigungstechnisch einfach und kostengünstig bereitgestellt werden kann.

Diese Aufgabe wird durch die Merkmale des Patentanspruchs 2 gelöst.

Ein Ausführungsbeispiel der Erfindung wird nach folgend anhand der Zeichnungen näher erläutert.

Es zeigen:
- Figur 1: Draufsicht auf eine Sensoreinrichtung;
- Figur 2: einen Teilschnitt durch die Sensoreinrichtung entlang der Linie 11-11 gemäß Figur 1 und
- Figur 3: einen Teilausschnitt der Wandung mit einem darin angeordneten zweischichtigen Strahlungsleiter.

Eine Sensoreinrichtung 1 besteht im wesentlichen aus einem Gehäuse 2, in dem auf einer Schaltungsträgerplatte 3, vorzugsweise einer Leiterplatte, neben einer nicht dargestellten Ansteuer- bzw. Auswerteschaltung ein Strahlungssender 4 und ein Strahlungsempfänger 5 angeordnet sind. Der Strahlungssender 4 ist als SMD-Sendediode und der Strahlungsempfänger als SMD-Empfangsdiode für die Infrarotstrahlung ausgebildet. Der Strahlungssender 4 und der Strahlungsempfänger 5 sind flach auf einer einer Scheibe 6 eines Kraftfahrzeuges zugewandten Seite der Schaltungsträgerplatte 3 angeordnet, wobei die optischen Achsen des Strahlungssenders 4 bzw. des Strahlungsempfängers 5 senkrecht zu der Scheibe 6 verlaufen.

Die Schaltungsträgerplatte 3 ist in einem nicht dargestellten topfförmigen Teil des Gehäuses 2 gelagert. Auf dem topfförmigen Teil ist formschlüssig ein deckelartiges Trägermodul 7 gehalten. Zu diesem Zweck weist das Trägermodul 7 abragende Rastarme 8 auf, die in korrespondierende Rastaufnahmen des topfförmigen Teils eingreifen.

Das deckelartige Trägermodul 7 besteht im wesentlichen aus einer flächigen Wandung 7', die als nicht transparentes Blockierelement 9 ausgebildet ist, das die Strahlung absorbiert. Das Blockierelement 9 weist eine Mehrzahl von Öffnungen 10 auf, mit dessen Rand optische Führungselemente 11, 11', 11" verbunden sind. Die optischen Führungselemente 11, 11', 11" sind als Strahlungsleiter ausgebildet. Das Blockierelement 9 umgreift und begrenzt die Strahlungsleiter 11, 11', 11" in einer Ebene parallel zu der Scheibe 6. Die einzelnen Strahlungsleiter 11, 11', 11" sind im wesentlichen prismenförmig ausgebildet und erstrecken sich paarweise in einer Richtung des Trägermoduls 7.

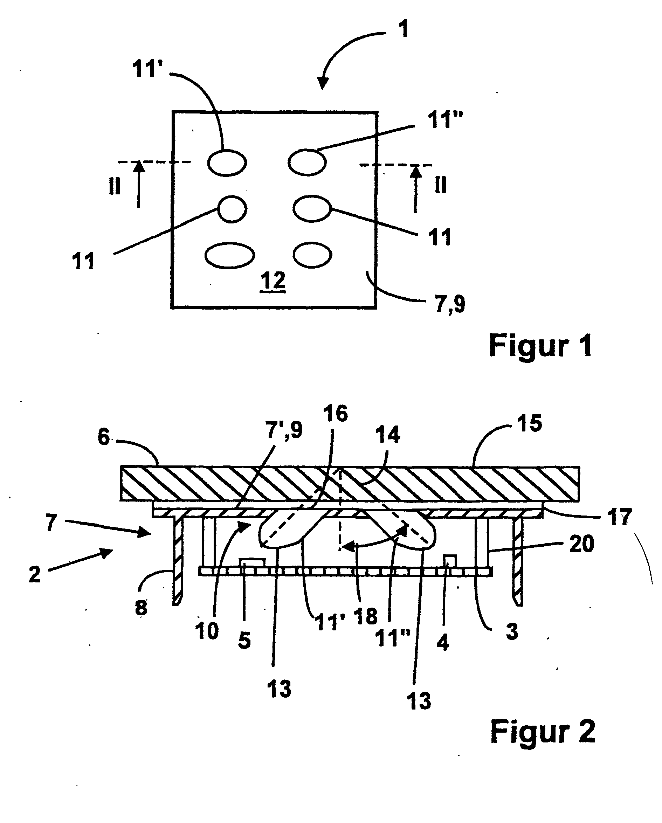

Das in Figur 2 dargestellte Paar von Strahlungsleitern 11', 11" ragt von einer Oberseite 12 des Trägermoduls 7 v-förmig in Richtung der korrespondierenden Strahlungssender 4 und Strahlungsempfänger 5 ab. An einem dem Strahlungssender 4 oder dem Strahlungsempfänger 5 zugewandten Ende des Strahlungsleiters 11', 11" ist eine konvexförmige Strahlungslinse 13 als Sammel/Richtelement angeordnet. Die Krümmung der Strahlungslinse 13 ist derart ausgebildet, dass die von dem Strahlungssender 4 emittierte Strahlung im wesentlichen parallel zur optischen Achse 14 derselben bzw. zur Längsachse des dem Strahlungssender 4 zugeordneten Strahlungsleiters 11" in Richtung der Scheibe 6 geleitet wird. Nach Totalreflexion der ausgesandten Strahlung an einer Außenseite 15 der Scheibe 6 werden die reflektierten Strahlen durch die am Ende des dem Strahlungsempfänger 5 zugeordneten Strahlungsleiter 11' angeordnete Strahlungslinse 13 derart gebündelt, dass sie konzentriert auf den Strahlungsempfänger 5 treffen.
Die Strahlungsleiter 11', 11" weisen an einem der Schaltungsträgerplatte 3 abgewandten Ende eine Schrägfläche 16 auf, die bündig zu der Oberseite 12 des Blockierelementes 9 ausgerichtet ist. Die Schrägflächen 16 der Strahlungsleiter 11', 11" bilden zusammen mit der Oberseite 12 des Blockierelementes 9 eine einstückige ebene Begrenzungsfläche des Trägermoduls 7, die mittels eines transparenten Klebers 17 als Koppelmedium haftend an die Scheibe 6 angebracht ist. Der Kleber 17 weist vorzugsweise die gleichen optischen Eigenschaften, insbesondere einen ähnlich großen Brechungsindex, auf wie die Scheibe 6 bzw. die Strahlungsleiter 11', 11".

Für den Einsatz der Sensoreinrichtung 1 als Regensensor sind die Strahlungsleiter 11', 11" derart geneigt zu der Scheibe 6 angeordnet, dass die Strahlung in oder aus der Scheibe 6 unter einem gleichen Einfalls- und Ausfallswinkel 18 ein- bzw. austritt, der gleich oder größer eines die Totalreflexion an der Außenseite 15 der Scheibe 6 bewirkenden Winkels (ca. 42°) ist.

Die Strahlungsleiter 11', 11" sind unter einem spitzeren Winkel zu der Scheibe 6 ausgerichtet. Dies kann beispielsweise zum Aufbau einer Meßstrecke zur Schmutzerkennung auf der Außenseite 15 der Scheibe 6 sinnvoll sein. Während hier bei unverschmutzter Scheibe 6 kein Signal im Strahlungsempfänger detektierbar ist, wird bei verschmutzter Scheibe 6 infolge der diffus von den Schmutzpartikeln reflektierten Strahlen ein Empfangssignal in dem Strahlungsempfänger 5 erzeugt, so dass mittels einer nachgeordneten Auswerteelektronik Maßnahmen ergriffen werden können, um die Scheibe 6 von der Verschmutzung zu befreien.

Alternativ kann das Trägermodul 7 auch dazu dienen, weitere Strahlungsleiter 11 in Verbindung mit zugeordneten Sensoren aufzunehmen, so dass in Abhängigkeit von der detektierten Helligkeit die Fahrlichtanlage oder eine Klimaanlage des Fahrzeuges gesteuert werden kann.

Wie aus Figur 1 deutlich wird, können innerhalb des Gehäuses 2 eine Mehrzahl von Sensoren, beispielsweise Regen-, Fahrlicht- und Sonnensensoren, untergebracht werden. Die Form der Strahlungsleiter 11, 11', 11" sind an den jeweiligen Sensortyp angepaßt.

Der in Figur 2 dargestellte Sensortyp dient als Regensensor, wobei das von dem Strahlungsempfänger 5 aufgenommene Signal in der Auswerteelektronik ausgewertet wird zur Ansteuerung einer nicht dargestellten Scheibenwischanlage des Kraftfahrzeuges.

Vorzugsweise kann die Schaltungsträgerplatte 3 über einen Abstandhalter 20 mit der Wandung 7' verbunden sein. Der Abstandhalter 20 kann vorteilhafter Weise einen Steckverbinder für die Schaltungsträgerplatte 3 aufweisen. Vorteilhaft kann der Abstandhalter 20 zusätzlich als Blende für die Strahlungsleiter 11', 11" dienen. Die Schaltungsträgerplatte 3 ist parallel zu der Wandung 7' ausgerichtet. Zur Herstellung der Sensoreinrichtung 1 wird die mit dem Strahlungssender 4 und dem Strahlungsempfänger 5 sowie der nicht dargestellten Steuerschaltung bestückte Schaltungsträgerplatte 3 in das topfförmige Teil des Gehäuses 2 eingesetzt. Nachfolgend wird das Trägermodul 7 bestehend aus der flächigen Wandung 7' und der Mehrzahl in den Öffnungen 10 angeformten Strahlungsleitem 11,11', ', 11" auf das topfförmige Teil aufgesetzt und rastend mit demselben verbunden. Alternativ kann die Verbindung auch durch Schweißen oder Kleben erfolgen.

Vorzugsweise bestehen die Wandung 7' und die Strahlungsleiter 11, 11', 11" aus einem Polycarbonat (PC). Alternativ können auch andere thermoplastische Kunststoffe verwendet werden.

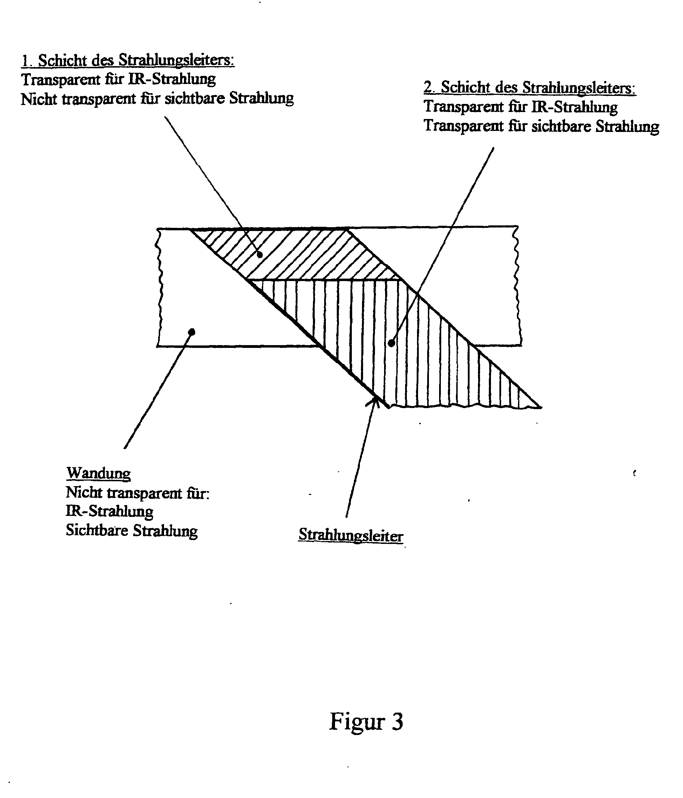

Je nachdem, in welchem Spektralbereich die Meßstrahlung liegt, und in welchem Spektralbereich der Strahlungsempfänger empfindlich ist, sind die Strahlungsleiter für unterschiedliche Spektralbereiche transparent bzw. nicht transparent ausgebildet. Verschiedene Konstellationen sind möglich.
1) Für einen Feuchte bzw. Schmutz detektierenden Sensor wird ein Infrarotstrahlungssender eingesetzt. Bei der Auswahl der Materialien für die Strahlungsleiter und die Wandung kann hier noch zwischen zwei Fällen für die spektrale Empfindlichkeit des Strahlungsempfängers unterschieden werden, der eingesetzt werden soll. Im ersten Fall ist der Strahlungsempfänger neben der IR-Meßstrahlung auch noch zumindest für Teile des sichtbaren Spektralbereichs empfindlich. Im zweiten Fall ist der Strahlungsempfänger nur für die IR-Meßstrahlung empfindlich.
   a) Einsatz eines Strahlungsempfängers, der neben der IR-Meßstrahlung auch noch zumindest für Teile des sichtbaren Spektralbereichs empfindlich ist: In diesem Fall wird für die Strahlungsleiter ein Material verwendet, dass für IR-Strahlung transparent ist und für Strahlung aus dem sichtbaren Spektralbereich nicht transparent ist. In einer Abwandlung (vgl. Figur 3) hiervon, die nicht zum beanspruchten Gegenstand gehört, ist der Strahlungsleiter zweischichtig aufgebaut. Dabei besteht die erste Schicht, die im eingebauten Zustand der Windschutzscheibe zugewandt ist, aus einem Material, das IR-Strahlung durchläßt und sichtbare Strahlung absorbiert. Die zweite Schicht, welche der Windschutzscheibe abgewandt ist, besteht aus einem Material, das für IR-Strahlung und für sichtbare Strahlung transparent ist. Auch dieser Schichtaufbau wird in vorteilhafter Weise in einem mehrstufigen Spritzgießverfahren hergestellt. Für das Material der Wandung wird ein Mate-rial verwendet, dass für IR-Strahlung und für Strahlung aus dem sichtbaren Spektralbereich nicht transparent ist. Falls die Einkopplung von Störstrahlung (Sonneneinstrahlung oder anderes Umgebungslicht) aus dem sichtbaren Spektralbereich durch die Strahlungsleiter im Vergleich zur Störeinstrahlung durch die Wandung nur geringfügig ist, kann das Material der Strahlungsleiter auch für den sichtbaren Spektralbereich transparent sein. Falls jedoch die Einkopplung von Störstrahlung aus dem sichtbaren Spektralbereich durch die Wandung im Vergleich zur Störeinstrahlung durch die Strahlungsleiter nur geringfügig ist, kann das Material der Wandung nur für den IR-Bereich nicht transparent ausgebildet sein, während es für den sichtbaren Spektralbereich transparent sein kann.
   b) Einsatz eines Strahlungsempfängers, der nur für die IR-Meßstrahlung empfindlich ist: In diesem Fall reicht es aus, dass das Material der Strahlungsleiter für die IR-Strahlung transparent ist und das Material der Wandung für IR-Strahlung nicht transparent ausgebildet ist, wobei beide Materialien für den sichtbaren Spektralbereich transparent sein können. Diese Ausführungsform gehört nicht zum beanspruchten Gegenstand.
2) Bei Verwendung von Messstrahlung im sichtbaren Spektralbereich bei einem Umgebungslichtsensor) sind wiederum andere Anforderungen an die optischen Eigenschaften der verwendeten Materialien zu stellen. Auch hier kann zwischen zwei Fällen unterschieden werden. Im ersten Fall ist der Strahlungsempfänger neben der Meßstrahlung im sichtbaren Spektralbereich auch noch zumindest geringfügig für IR-Strahlung empfindlich. Im zweiten Fall ist der Strahlungsempfänger nur für den sichtbaren Spektralbereich empfindlich.
   a) Verwendung eines Strahlungsempfängers, der neben dem sichtbaren Spektralbereich zumindest geringfügig auch für den IR-Bereich empfindlich ist:
      In diesem Fall wird für die Strahlungsleiter ein Material verwendet, dass für sichtbare Strahlung transparent ist und für IR-Strahlung nicht transparent ist. Für das Material der Wandung wird ein Material verwendet, dass für Strahlung aus dem sichtbaren Spektralbereich und für IR-Strahlung nicht transparent ist. Falls die Einkopplung von IR-Störstrahlung durch die Strahlungsleiter im Vergleich zur Störeinstrahlung durch die Wandung nur geringfügig ist, kann das Material der Strahlungsleiter auch für den IR-Bereich transparent sein. Falls jedoch die Einkopplung von IR-Störstrahlung durch die Wandung im Vergleich zur Störeinstrahlung durch die Strahlungsleiter nur geringfügig ist, kann das Material der Wandung nur für den sichtbaren Spektralbereich nicht transparent ausgebildet sein, während es für den IR-Bereich transparent sein kann.
      Diese Ausführungsform gehört nicht zum beanspruchten Gegenstand.
3) Erfindungsgemäß wird in der Sensoreinrichtung sowohl IR-Meßstrahlung als auch Meßstrahlung aus dem sichtbaren Bereich eingesetzt. In Weiterführung des bekannten zweistufigen Spritzgießverfahrens wird ein dreistufiges Spritzgießverfahren angewandt. Dabei werden in einem Schritt die Strahlungsleiter ausgebildet, die nur für die IR-Strahlung transparent sind, während in einem anderen Schritt die Strahlungsleiter ausgebildet werden, die für sichtbare Strahlung transparent sind. Schließlich werden die so ausgebildeten Strahlungsleiter mit einem für IR-Strahlung und sichtbare Strahlung nicht transparenten Material zur Ausbildung der Wandung umspritzt. Dabei kann erfindungsgemäß auch die Reihenfolge umgekehrt werden, wobei dann zuerst die Wandung unter Bildung von Öffnungen gespritzt wird, und dann die Materialien zur Ausbildung der Strahlungsleiter, die für unterschiedliche Spektralbereiche transparent sind, in die Öffnungen hinein gespritzt werden.

Da die erfindungsgemäße Sensoreinrichtung ein kombinierter Regen- und Umgebungslichtsensor (z.B. Sonnensensor) ist, ist dem Umgebungslichtsensor selbstverständlich kein Strahlungssender im Gehäuse zugeordnet.

Durch die einzelnen, voneinander getrennte Ausbildung der Strahlungsleiter 11, 11', 11" wird die Eintritts- bzw. Austrittsfläche an der Oberseite 12 derselben wesentlich reduziert. Damit verbunden ist auch eine Reduzierung des unerwünschten Fremdstrahlungsanteils aus der Umgebung, der zu einer Verfälschung des Meßergebnisses führen könnte. Diese "optische Trennung" wird insbesondere durch das die Strahlungsleiter 11, 11' trennende Blockierelement 9 erzielt.

Alternativ kann die Strahlungslinse auch als ein von dem optischen Führungselement beabstandeter Reflektor oder als Prismenkörper ausgebildet sein.

Die erfindungsgemäße Sensoreinrichtung kann auch alternativ im Scheinwerferbereich oder in der Heckscheibe eingesetzt werden. Eine Anwendung kommt überall dort in Frage, wo auf einer Oberfläche das Vorhandensein einer oder mehrerer Partikel detektiert werden sollen, wobei zwei, für die eingesetzte Strahlungsart der Sensoren unterschiedlich transparente Elemente eingesetzt werden.

## Patentansprüche

1. Sensoreinrichtung zur Erfassung des Benetzungs- und/oder Verschmutzungsgrades einer an einem Kraftfahrzeug angeordneten Scheibe (6) mit einem Gehäuse(2) bestehend aus
a) an einer Innenseite der Scheibe ankoppelbaren optischen Führungselementen(11', 11") einer ersten Art,
b) einem Strahlungssender(4) und einem Strahlungsempfänger (5), denen jeweils ein mit dem optischen Führungselement(11', 11") der ersten Art gekoppeltes Sammel /Richtelement (13) zugeordnet sind
c) wobei der Strahlungssender (4) als Sender für Intrarotstrahlung und der Strahlungsempfänger (5) als Empfänger für Infrarotstrahlung ausgebildet ist,
d) wobei die optischen Achsen der gekoppelten Sammel-/Richtelemente (13) in einem spitzen Winkel zu der Scheibe (6) ausgerichtet sind,
e) wobei das optische Führungselement (11', 11") der ersten Art jeweils auf einer dem Strahlungssender (4) und/ oder Strahlungsempfänger (5) abgewandten Seite bündig zu einer der Scheibe (6) zugewandten Wandung (7') des Gehäuses (2) angeordnet ist,
f) wobei dem Strahlungssender (4) und dem Strahlungsempfänger (5) jeweils ein gesondertes optisches Führungselement (11', 11")der ersten Art zugeordnet sind,
g) wobei die optischen Fübnmgselemente (11',11") der ersten Art durch ein. Spritzgießverlähren einstückig mit der Wandung (7') verbunden sind,
h) wobei die optischen Führungselemente (11', 11") der ersten Art aus einem Kunststoffmaterial bestehen, das nur für Infrarotstrahlung transparent ist,
i) die Wandung (7')aus einem Kunststoffmaterial besteht, dass für Infrarotstrahlung und für Strahlung aus dem sichtbaren Spektralbereich nicht transparent ist,
**dadurch gekennzeichnet, dass**
j) zur Erfassung von Umgebungslicht mindestens ein Umgebungslicht zu einem weiteren Strahlungsempfäger führendes optisches Führungselement (11) einer zweiten Art aus einem für Strahlung aus dem sichtbaren Spektralbereich transparenten Kunststoffmaterial vorgesehen ist,
k) das mindestens eine optische Führungselement (11) der zweiten Art durch ein Spritzgießverfahren einstückig mit der Wandung (7') ausgebildet ist.

2. Verfahren zur Herstellung einer Sensoreinrichtung Sir Kraftfahrzeuges, die mittels eines transparenten Koppelmediums (17) an der Innenseite der Scheibe (6) des Kraftfahrzeuges befestigt wird, wobei mindestens ein die Strahlung zwischen einem innerhalb eines Gehäuses (2) angeordneten Strahlungsempfänger (5) und/oder Strahlungssender (4) einerseits und zumindest einer Außenseite (15) der Scheibe (6) andererseits führendes optisches Führungselement (11', 11") und eine das optische Führungselement (11', 11") begrenzende Wandung (7') des Gehäuses (2) durch einen mehrstufigen Spritzgießvorgang aus Kunststoffmaterial hergesteltt werden, wobei
- das optische Führungselement (11', 11") aus einem nur für Infrarotstrahlung transparenten Kunststoffmaterial geformt wird, und
- die Wandung (7') aus einem Kunststoffmaterüd geformt wird, das für Infrarotsrahlung und für Strahlung aus dem sichtbaren Spektralbereich nicht transparent ist,
**dadurch gekennzeichnet, dass**
durch einen dreistufigen Spritzgießvorgang mindestens ein Umgebungslicbt zu einem weiteren Stralungsempfänger führendes optisches Führungselement (11) aus einem für Strahlung aus dem sichtbaren Spektralbereich transparenten Kunststoffmaterial ebenfalls von der Wandung (7') aufgenommen wird,
wobei
entweder
- in einem ersten Schritt mindestens ein optisches Führungselement (11', 11") aus einem nur für Infrarotstrahlung transparenten Kunststoffmaterial geformt wird,
- in einem zweiten Schritt mindestens ein optisches Führungselement (11) aus einem für Strahlung aus dem sichtbaren Spektralbereich transparenten Kunststoffmaterial geformt wird,
- in einem dritten Schritt die optischen Führungselemente (11, 11', 11") von dem die Wandung (7') bildenden Kunststoffmaterial umspritzt werden,
oder
- in einem ersten Schritt die Wandung (7') unter Bildung von Öffnungen (10) aus einem Kunststoffmaterial geformt wird,
- in einem zweiten Schritt mindestens ein optisches Führungselement (11', 11") aus einem nur für Infrarotstrahlung transparenten Kunststoffmaterial an den Rand von mindestens einer Öffnung (10) gespritzt wird,
- in einem dritten Schritt mindestens ein optisches Führungselement (11) aus einem für Strahlung aus dem sichtbaren Spektralbereich transparenten Kunststoffmaterial an den Rand von mindestens einer Öffnung (10) gespritzt wird.

## Claims

1. Sensor device for detecting a degree of wetting and/or pollution of a disc (6) with a housing (2) arranged on a motor vehicle, composed of
a) optical guide elements (11', 11") of a first kind, coupled to an inside of the disc;
b) a radiation emitter (4) and a radiation receiver (5) which are respectively associated with a collecting/directing element (13) coupled with the optical guide element (11', 11") of the first kind;
c) where the radiation emitter (4) is designed as an emitter of infrared radiation, and the radiation receiver (5) is designed as a receiver for infrared radiation;
d) where the optical axes of the coupled collecting/directing elements are oriented at an acute angle relative to the disc (6);
e) where the optical guide element (11', 11") of the first kind is on a respective side which is facing away from the radiation emitter (4) and/or radiation receiver (5) arranged positively relative to a wall (7') of the housing (2) oriented towards the disc (6);
f) where the radiation emitter (4) and the radiation receiver (5) are respectively associated with a separate optical guide element (11', 11 ") of the first kind;
g) where the optical guide elements (11', 11") of the first kind are by way of injection-moulding integrated with the wall (7');
h) where the optical guide elements (11', 11") of the first kind are composed of a plastic material which is transparent only to infrared radiation; and
i) the wall (7') is composed of a plastic material which is not transparent to infrared radiation and for radiation of the visible spectral range,
**characterised in that**
j) for the purpose of detecting environmental light is provided at least one environmental light to a further optical guide element (11) of a second kind, which leads to a further radiation receiver and which is made of a plastic material which is transparent to radiation from the visible spectral range;
k) k) the at least one optical guide element (11) of the second kind is integrated with the wall (7') by an injection-moulding process.

2. Method for production of a sensor device for motor vehicles which is mounted by means of a transparent coupling medium (17) on the inside of the disc (6) of the motor vehicle, and at least one optical guide element (11', 11") which ducts the radiation between a radiation receiver (5) arranged within a housing (2) and/or radiation emitter (4) and at least one outside (15) of the disc on the other side, and a wall (7') of housing (2) which defines the optical guide element (11', 11") are made of plastic material in a multi-stage injection-moulding process, and
- the optical guide element (11', 11") is shaped from a plastic material which is transparent only to infrared radiation; and
- the wall (7') is shaped of a plastic material which is not transparent to infrared radiation and radiation of the visible spectral range,
**characterised in that**
by way of a three-stage injection-moulding process at least one optical guide element (11) which guides at least one environmental light is also accommodated by a plastic material of wall (7') which is transparent to radiation of the visible spectral range, and
either
- in a first stage, at least one optical guide element (11', 11") is shaped from a plastic material which is transparent only to infrared radiation,
- in a second stage, at least one optical guide element (11) is shaped from a plastic material which is transparent to radiation of the visible spectral range;
- in a third stage, the optical guide elements (11, 11, 11 ") are injection-moulded by the plastic material which forms wall (7'),
or
- in a first stage, the wall (7') is shaped from a plastic material whilst establishing openings (10);
- in a second stage, at least one optical guide element (11', 11") of a plastic material which is transparent only to infrared radiation is injection-moulded onto the edge of at least one opening (10);
- in a third stage, at least one optical guide element (11) of a plastic material which is transparent to radiation of the visible spectral range is injection-moulded onto the edge of at least one opening (10).

## Revendications

1. Capteur pour détecter le degré de mouillage et/ou de salissure d'un pare-brise monté sur un véhicule (6) muni d'un boîtier (2) composé
a) d'éléments de guidage optiques (11', 11") d'un premier type pouvant être couplés au côté interne du pare-brise,
b) d'un radio-émetteur (4) et d'un radio-récepteur (5), auxquels est associé respectivement un élément de collecte/directeur (13) couplé à l'élément de guidage optique (11', 11") du premier type,
c) dans lequel le radio-émetteur (4) est réalisé sous la forme d'un capteur à rayonnement infrarouge et le radio-récepteur (5) est réalisé sous la forme d'un récepteur à rayonnement infrarouge,
d) dans lequel les axes optiques des éléments de collecte/directeurs couplés (13) sont orientés selon un angle aigu par rapport au pare-brise (6),
e) dans lequel l'élément de guidage optique (11', 11") du premier type est disposé sur un côté opposé au radio-émetteur (4) et/ou au radio-récepteur (5) au ras d'une paroi (7') du boîtier (2) tournée vers le pare-brise (6),
f) dans lequel un élément de guidage optique distinct (11', 11") du premier type est respectivement associé au radio-émetteur (4) et au radio-récepteur (5),
g) dans lequel les éléments de guidage optiques (11', 11") du premier type sont reliés d'un seul tenant à la paroi (7') par un procédé de moulage par injection,
h) dans lequel les éléments de guidage optiques (11', 11") du premier type sont composés d'un matériau synthétique, qui est transparent uniquement au rayonnement infrarouge,
i) la paroi (7') est composée d'un matériau synthétique, qui n'est pas transparent au rayonnement infrarouge ni au rayonnement provenant du domaine spectral visible,
**caractérisé en ce que**
j) en vue de la détection d'une lumière extérieure, au moins un élément de guidage optique (11) d'un second type guidant la lumière extérieure vers un autre radio-récepteur est prévu en un matériau synthétique transparent à un rayonnement provenant du domaine spectral visible,
k) le au moins élément de guidage optique (11) du second type est réalisé d'un seul tenant avec la paroi (7') par un procédé de moulage par injection.

2. Procédé de fabrication d'un capteur pour véhicules, qui est fixé grâce à un moyen de couplage transparent (17) au côté interne du pare-brise (6) du véhicule, dans lequel au moins un élément de guidage optique (11', 11") guidant le rayonnement entre le radio-récepteur (5) et/ou le radio-émetteur (4) disposés à l'intérieur d'un boîtier (2) d'une part et au moins un côté externe (15) du pare-brise (6) d'autre part et une paroi (7') du boîtier (2) limitant l'élément de guidage optique (11', 11") sont fabriqués en un matériau synthétique par un procédé de moulage par injection à plusieurs étapes, dans lequel
- l'élément de guidage optique (11', 11") est réalisé en un matériau synthétique transparent uniquement au rayonnement infrarouge, et
- la paroi (7') est réalisée en un matériau synthétique, qui n'est pas transparent au rayonnement infrarouge ni au rayonnement provenant du domaine spectral visible,
**caractérisé en ce que**
au moins un élément de guidage optique (11) en un matériau synthétique transparent à un rayonnement provenant du domaine spectral visible et guidant une lumière extérieure vers un autre radio-récepteur est incorporé dans la paroi (7') par un procédé de moulage par injection à trois étapes,
dans lequel, soit
- au cours d'une première étape, au moins un élément de guidage optique (11', 11") est réalisé en un matériau synthétique transparent uniquement au rayonnement infrarouge,
- au cours d'une seconde étape, au moins un élément de guidage optique (11) est réalisé en un matériau synthétique transparent à un rayonnement provenant du domaine spectral visible,
- au cours d'une troisième étape, les éléments de guidage optiques (11, 11', 11") sont enrobés par le matériau synthétique formant la paroi (7'),
soit
- au cours d'une première étape, la paroi (7') un est réalisée en un matériau synthétique lors de la formation des orifices (10),
- au cours d'une seconde étape, au moins un élément de guidage optique (11', 11") est moulé en un matériau synthétique transparent uniquement au rayonnement infrarouge au bord d'au moins un orifice (10),
- au cours d'une troisième étape, au moins un élément de guidage optique (11) est moulé en un matériau synthétique transparent au rayonnement provenant du domaine spectral visible au bord d'au moins un orifice (10).
